# EUROPEAN PATENT APPLICATION

(11) **EP 2 482 615 A1**
(43) Date of publication of application: **01.08.2012**
(21) Application number: 12151752.8
(22) Date of filing: 19.01.2012
(51) Int. Cl.: H05B 33/08

(54) **Lighting device and luminaire with failure protection**

(30) Priority: 31.01.2011 JP 2011018791
(71) Applicant: Toshiba Lighting & Technology Corporation, Yokosuka-shi Kanagawa 237-8510 (JP)
(72) Inventor: Iwai, Naoko, Kanagawa 237-8510 (JP); Kubota, Hiroshi, Kanagawa 237-8510 (JP); Kamata, Masahiko, Kanagawa 237-8510 (JP); Terasaka, Hiroshi, Kanagawa 237-8510 (JP)
(74) Representative: Sander Jakobsson, Sofia Ellinor

(57) **Abstract**

According to one embodiment, a lighting device includes a power supply circuit and a control circuit. The power supply circuit lights a light source. The control circuit determines a threshold based on an output from the power supply circuit to the light source, and controls the power supply circuit to cause a protecting operation to be performed when an output voltage of the power supply circuit deviates from the threshold.

## Description

### FIELD

Embodiments described herein relate generally to a lighting device to light an illumination lamp and a luminaire.

### BACKGROUND

In a lighting device of an illumination lamp, when the illumination lamp is placed in an open mode because, for example, the illumination lamp is disconnected from a power supply circuit, an arc discharge becomes liable to occur. Thus, a protecting operation is required to be performed. Besides, also when the illumination lamp is shorted and can not be used, since there is an abnormal load, the protecting operation is preferably performed.

When the abnormal load occurs, this is detected and the lighting device can be made to perform the protecting operation. When the abnormal load is detected by monitoring the output voltage of the power supply circuit, in general, a threshold is set, and when the output voltage deviates from this threshold, a determination is made that there is abnormality.

On the other hand, a request may be made to enable illumination lamps different from each other in load voltage within a range of, for example, 45 to 95V to be lit by using the same power supply circuit. Besides, even in the same illumination lamp, dimming may be performed. Also in this case, the load voltage is changed according to the dimming level.

However, hitherto, if the lighting condition of the illumination lamp is changed, since the threshold is fixed, an appropriate protecting operation can not be performed. That is, the threshold can not be changed to a suitable value in accordance with the change of the lighting condition.

An object of an exemplary embodiment is to provide a lighting device and a luminaire, in which threshold setting is changed in accordance with a lighting condition of an illumination lamp to appropriately control a power supply circuit, and a load voltage within a specified range can be handled.

### BRIEF DESCRIPTION OF THE DRAWINGS

FIG. 1 is a circuit view showing a lighting device of a first embodiment.
FIG. 2 is a diagram of a voltage level for explaining a threshold for the protecting operation control of the lighting device.
FIG. 3 is a circuit view showing a lighting device of a second embodiment.
FIG. 4 is a voltage waveform view for explaining a relation between an operation timing of a mounting detection circuit of the lighting device and a voltage.
FIG. 5 is a voltage waveform view for explaining a relation between a threshold of the mounting detection circuit and a detection voltage at power-on.
FIGS. 6 (a) to 6 (c) are waveform views of respective parts at the time of de-mounting of an illumination lamp of the lighting device, in which FIG. 6(a) is a waveform view of an output voltage of a load voltage detection circuit, FIG. 6 (b) is a waveform view of a drive signal voltage, and FIG. 6(c) is a waveform view of a both-end voltage of the illumination lamp.
FIG. 7 is a flowchart of the protecting operation control of the lighting device.

### DETAILED DESCRIPTION

In general, according to one embodiment, a lighting device includes a power supply circuit and a control circuit. The power supply circuit lights a light source. The control circuit determines a threshold based on an output from the power supply circuit to the light source, and controls the power supply circuit to cause a protecting operation to be performed when an output voltage of the power supply circuit deviates from the threshold.

The control circuit is provided which determines the threshold based on the output from the power supply circuit to the light source, and controls the power supply circuit to cause the protecting operation to be performed when the output voltage of the power supply circuit deviates from threshold. Accordingly, even if the output from the power supply circuit to the light source is changed by variation of a lighting condition, the threshold is again determined in accordance with that. Thus, when the output is changed and deviates from the threshold, the power supply circuit performs the protecting operation, and the protecting property can be improved.

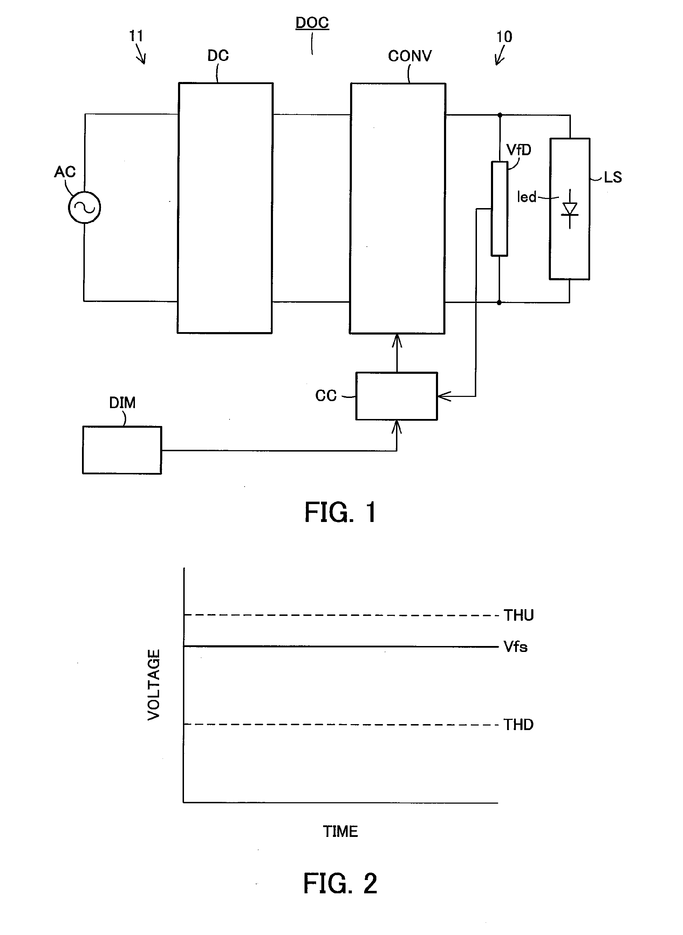

Next, a first embodiment will be described with reference to FIG. 1 and FIG. 2.

As shown in FIG. 1, a luminaire 10 includes a lighting device 11 and an illumination lamp LS as a light source. The lighting device 11 includes a power supply circuit DOC to light the illumination lamp LS as the light source, a load voltage detection circuit VfD as a detection circuit, a dimming signal generation circuit DIM and a control circuit CC.

First, the illumination lamp LS will be described. Although the illumination lamp LS is preferably used for lighting, the lamp may be used for another use by request. In the illumination lamp LS to be used, the number of used LEDs led is not specifically limited. Accordingly, plural LEDs led may be provided in order to obtain a desired amount of light. In this case, the plural LEDs led can form a series-connected circuit or a series-parallel circuit. However, the illumination lamp LS may include a single LED led. Incidentally, the light source of the illumination lamp LS is not limited to the LED, and may be an electro-luminescence (EL), an organic light-emitting diode (OLED), an organic electro-luminescence (OEL) or the like.

Besides, the illumination lamp LS may include a power receiving end for connection with an output end of the power supply circuit DOC. Although the power receiving end has preferably a form of a cap, no limitation is made to this. Incidentally, as the cap, well-known various structures can be appropriately adopted. In brief, as long as a structure is for connection with the output end, the remainder of the structure is not specifically limited. For example, the power receiving end may have a form of a connector extended through a conductive wire from the main body of the illumination lamp LS. Besides, the power receiving end may be a connection conductor itself.

Further, the illumination lamp LS may have various forms. For example, the form may be a straight tube shape in which caps are provided at both ends, or a single cap shape, as in an incandescent lamp, in which a screw cap is provided at one end.

Further, a desired number of illumination lamps LS can be connected in series to or in parallel to the power supply circuit DOC. Incidentally, if the parallel connection is performed, a constant-current circuit is preferably made to intervene so that load currents flowing through the respective parallel circuits are equalized.

In the illustrated embodiment, the illumination lamp LS has a straight tube shape, plural series-connected LEDs are dispersed and arranged in a not-shown straight tube-shaped outer tube, and the power receiving ends formed at both ends form pin-shaped caps.

Further, the load voltage of the illumination lamp LS at the time of lighting may be within a range of 45 to 95V.

Next, the power supply circuit DOC will be described. The power supply circuit DOC includes input ends connected to an alternating-current power supply AC and output ends to which the illumination lamp LS is connected. The power supply circuit DOC supplies direct-current power to the illumination lamp LS through the output ends and lights the illumination lamp LS. Incidentally, the power supply circuit DOC preferably includes a direct-current power supply DC and a DC-DC converter CONV.

The output end has only to be structured so as to be fitted with the power receiving end of the illumination lamp LS, and the remainder of the structure is not specifically limited. For example, although the form of the socket is preferable, if the power receiving end of the illumination lamp LS has a form of a connector, the output end may have a form of a connector receiver. Besides, if the power receiving end has a form of a connection conductor, the output end may have a form of a terminal stand to receive the connection conductor.

Besides, if the power supply circuit DOC includes the DC-DC converter CONV and the direct-current power supply DC, as the DC-DC converter CONV, for example, various choppers are preferable, since the conversion efficiency is high and the control is easy. The DC-DC converter CONV generally converts an input direct-current voltage into a direct-current of a different voltage. The output voltage is applied to the illumination lamp LS. The illumination lamp LS can be dimmed and lit to a desired level by controlling the output of the DC-DC converter CONV and adjusting the output voltage.

If the power supply circuit DOC is mainly composed of the DC-DC converter CONV, the direct-current power supply DC and the DC-DC converter CONV can be arranged in one-to-one correspondence. Besides, the direct-current power supply DC is made common, plural DC-DC converters CONV are provided in one-to-plural correspondence, and the direct-current input may be supplied in parallel to the plural DC-DC converters CONV. Incidentally, in the latter case, by request, the respective DC-DC converters CONV are provided at positions adjacent to the illumination lamp LS, and the common direct-current power supply DC can be provided at a position separate from the illumination lamp LS.

Further, the power supply circuit DOC may be constructed so as to constant-current control the output thereof. In this case, a composite control characteristic may be provided such that in a partial region, for example, in a region where the lighting power of the illumination lamp LS is low, in other words, in a deep dimming region, constant-voltage control is performed, and in the other region, the constant-current control is performed.

Further, in order to change the operation state of the illumination lamp LS, the power supply circuit DOC can be constructed such that the output of the power supply circuit DOC can be changed so as to change the direct-current power supplied to the illumination lamp LS according to an output control signal, for example, a dimming signal. That is, the illumination lamp LS can be dimmed and lit according to the dimming signal sent from the dimming signal generation circuit DIM. Incidentally, the dimming signal may be modulated by using a PWM modulation system.

Although the DC-DC converter CONV converts the direct-current power supplied from the direct-current power supply DC, outputs a desired voltage, and energizes and lights the illumination lamp LS, the remainder of the structure is not specifically limited. Incidentally, the DC-DC converter CONV is a device to convert a direct-current power into a direct-current power of a different voltage, and is a device also called a forward conversion device. The DC-DC converter may be a flyback converter, a forward converter, a switching regulator or the like in addition to various choppers.

The structure of the direct-current power supply DC to supply a desired input to the DC-DC converter CONV is not specifically limited. For example, the structure may be such that a rectifying circuit and a smoothing circuit are provided, and the input end thereof is connected to the alternating-current power supply AC. As the smoothing circuit, an electrolytic capacitor can be used, or a booster chopper can be used. Incidentally, harmonics flowing out to the alternating-current power supply AC side can be effectively reduced by using the booster chopper.

Further, the power supply circuit DOC is constructed such that even if the illumination lamp LS having a load voltage of 45 to 95V is connected to the output end, this can be normally lit. Thus, the output voltage can be changed correspondingly to the load voltage of the illumination lamp LS.

Next, the load voltage detection circuit VfD will be described. The load voltage detection circuit VfD is a circuit to detect the load voltage of the illumination lamp LS connected to the output end of the power supply circuit DOC through the output voltage at the output end, and inputs the detection output to the control circuit CC. Besides, for the protecting operation of the power supply circuit DOC, the load voltage detection circuit VfD detects the output voltage used for determining a threshold, and the control circuit CC monitors and controls so that the output voltage does not deviate from the threshold.

Next, the dimming signal generation circuit DIM will be described. The dimming signal generation circuit DIM is a circuit that generates a dimming signal, sends the signal to the control circuit CC, and causes the illumination lamp LS to be dimmed and lit according to the dimming signal. For that purpose, the dimming signal generation circuit DIM generates the dimming signal by an appropriate modulating system, for example, a PWM system. Besides, the dimming signal generation circuit DIM may be independent of the lighting device 11 and may be disposed at a position separate from the lighting device 11, or may be incorporated in the lighting device 11.

The dimming signal sent from the dimming signal generation circuit DIM to the control circuit CC is demodulated in the control circuit CC. A drive signal outputted from a drive signal generation circuit DSG is intermitted according to a dimming degree.

The dimming may be continuous dimming in which the light output of the illumination lamp LS is continuously changed, or dimming in which the light output is stepwise changed. As compared with the whole light lighting of the illumination lamp LS, the load voltage is reduced during the dimming lighting. Thus, the presence of dimming lighting, and its degree, that is, dimming degree can be monitored by detecting the load voltage with the load voltage detection circuit VfD.

Next, the control circuit CC will be described. The control circuit CC checks, for example, the dimming signal, and when the lighting condition of the illumination lamp LS, that is, the dimming degree is changed, the control circuit continuously samples the output voltage controlled and inputted from the load voltage detection circuit VfD for a specified time suitable for obtaining an average value of sampling values, for example, 500 ms, and averages the sampling values during that period. The average value of the sampling values of the output voltage is made a reference output voltage Vfs, and a threshold TH is determined in view of the control width for this.

In this embodiment, the threshold is determined as described below.

That is, if an object is a protecting operation for de-mounting of the illumination lamp LS and an open mode failure, for example, as shown in FIG. 2, the reference output voltage Vfs + 20V is made an upper limit threshold THU. When the output voltage exceeds the upper limit threshold THU, the control circuit CC determines that the de-mounting of the illumination lamp LS or the open mode failure occurs, and controls the power supply circuit DOC to cause the protecting operation to be performed. As a result, the occurrence of arc discharge at the time of the de-mounting and at the time of the open mode failure, or abnormal heat generation due to contact resistance can be prevented.

Incidentally, the "de-mounting" means that the illumination lamp LS mounted on the output end of the power supply circuit DOC is detached from the output end because of some reason, or the contact becomes loose and the contact resistance becomes large. When the connection is detached, arc discharge is apt to occur at that time. For example, if the power supply circuit DOC is constant-current controlled, when the connection is detached, since an output voltage Vf of the power supply circuit DOC increases, the arc discharge is more apt to occur.

Besides, in order to cause the power supply circuit DOC to perform the protecting operation for the short-circuit mode failure of the illumination lamp LS, a lower limit threshold THD can be set in addition to the threshold THU by request. For example, as shown in FIG. 2, the lower limit threshold THD is 1/2 of the reference output voltage Vfs. Accordingly, when the output voltage Vf of the power supply circuit DOC becomes lower than the lower limit threshold THD, if the control circuit CC controls the power supply circuit DOC and causes the protecting operation to be performed, that is, preferably causes the illumination lamp LS to be turned off, the lighting device 11 can be protected at the time of the short-circuit mode failure.

In brief, in the first embodiment, the output voltage between the upper limit threshold THU and the lower limit threshold THD is in a normal range. Accordingly, with respect to the upper limit threshold THU, when the output voltage exceeds the normal range, the control circuit CC determines that the output voltage deviates from the threshold and controls the power supply circuit DOC to cause the protecting operation to be performed. Similarly, with respect to the lower limit threshold THD, when the output voltage becomes lower than the normal range, the control circuit determines that the output voltage deviates from the threshold, and causes the protecting operation to be performed.

Next, a method of connecting the change of the lighting condition of the illumination lamp LS with the setting of the threshold will be described. In this embodiment, with respect to the change of the lighting condition of the illumination lamp LS, the output voltage of the power supply circuit DOC is directly monitored and a determination can be made that the lighting condition is changed. In this case, when the output voltage is changed, it is necessary to accurately grasp whether the change is a normal change of the lighting condition or whether an abnormal state occurs. In order to grasp this, for example, the change amount of the output voltage or the change pattern is preferably carefully monitored.

However, instead of the foregoing mode, the change of the lighting condition of the illumination lamp LS may be indirectly checked. That is, the change of the lighting condition of the illumination lamp LS can be known by checking a control signal, for example, a dimming signal. Since this mode can be performed relatively easily, this is recommendable. Besides, in the case of the change of the lighting condition caused by replacing the illumination lamp LS under lighting by an illumination lamp LS having a different rated load voltage, the lamp replacement is preferably performed after the power supply is once turned off. By doing so, when the power supply is again turned on after the replacement of the lamp, the output voltage is monitored and the threshold can be newly set by the foregoing method.

Incidentally, the control circuit CC can be constructed by adding functions such as, in addition to the control for the protecting operation to the power supply circuit DOC, control for causing the output control characteristic to become, for example, constant-current control, constant-voltage control or constant-power control, and output adjustment control for causing the illumination lamp LS to be dimmed and lit.

Besides, although the control circuit CC is preferably mainly composed of a digital device, for example, a microcomputer, an analog circuit unit may be used by request.

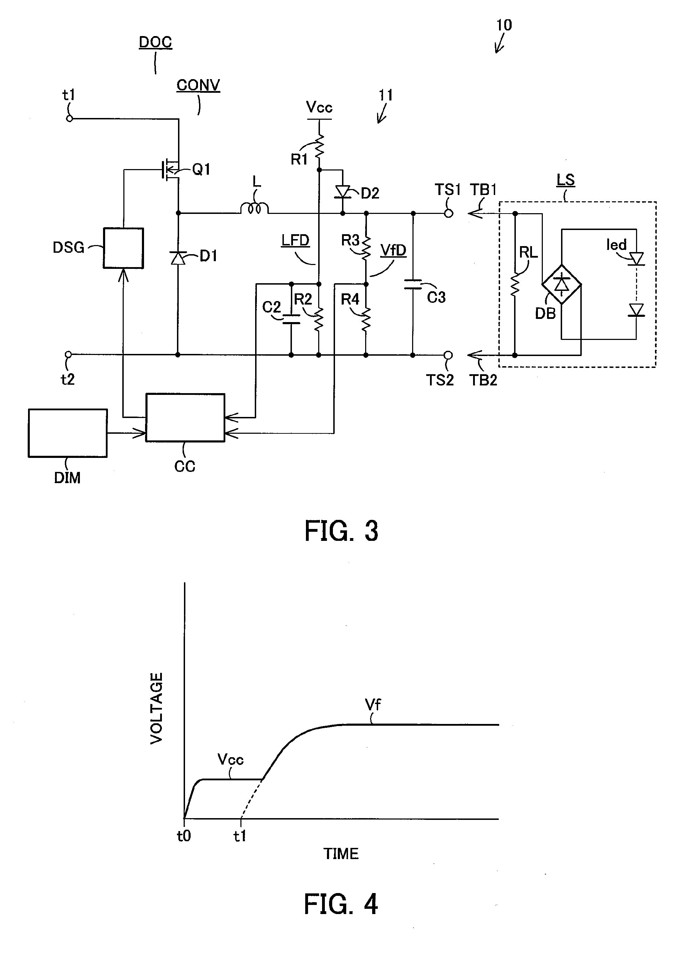

Next, a second embodiment will be described with reference to FIG. 3 to FIG. 7. Incidentally, the same portion as that of the first embodiment is denoted by the same character and its description is omitted.

In the second embodiment, as shown in FIG. 3, a DC-DC converter CONV of a power supply circuit DOC constitutes a step-down chopper, and a load voltage detection circuit VfD is formed of a voltage dividing circuit. Further, a mounting detection circuit LFD is provided.

First, the step-down chopper will be described. In the step-down chopper, a series circuit of a switching element Q1, an inductor L and an output capacitor C3 is connected to input ends t1 and t2. Incidentally, the switching element Q1 is supplied with a drive signal from a drive signal generation circuit DSG and performs a switching operation.

A series circuit of a diode D1 and an output capacitor C3 is connected in parallel to the inductor L in an illustrated polarity, and a closed circuit of those is formed. A pair of output ends TS1 and TS2 of the DC-DC converter CONV of the power supply circuit DOC are extracted from both ends of the output capacitor C3. Incidentally, the output ends TS1 and TS2 have socket shapes.

Next, the load voltage detection circuit VfD will be described. In the load voltage detection circuit VfD, a series circuit of resistors R3 and R4 is connected between the output ends TS1 and TS2. A voltage proportional to an output voltage appearing between both ends of the resistor R4 is inputted as a load voltage to a control circuit CC. The load voltage detection circuit VfD detects the load voltage while the DC-DC converter CONV of the power supply circuit DOC is operating, and operates as described in the first embodiment of FIG. 1.

Next, the mounting detection circuit LFD will be described. The mounting detection circuit LFD is a circuit to check the presence of mounting of an illumination lamp LS at power-on, and includes resistors R1 and R2, a capacitor C2 and a diode D2. The resistors R1 and R2 form a series circuit, and a direct-current control voltage Vcc is applied between both ends thereof. Incidentally, the direct-current control voltage Vcc is supplied by a not-shown auxiliary power supply circuit. The auxiliary power supply circuit is connected to an alternating-current power supply AC. The capacitor C2 is connected in parallel to the resistor R2, and functions to average the terminal voltage of the resistor R2 and to input the voltage to the control circuit CC. The diode D2 connects a connection point between the resistors R1 and R2 and the output end TS1 in the illustrated polarity, and prevents a current from flowing into the mounting detection circuit LFD from the power supply circuit DOC.

Next, the control circuit CC will be described. The control circuit CC sets a variable threshold based on the detection output inputted from the load voltage detection circuit VfD as described above, and mainly detects de-mounting to control the power supply circuit DOC and to cause a protecting operation to be performed.

Besides, the control circuit CC compares the detection output controlled and inputted from the mounting detection circuit LFD with a previously set threshold, and determines whether or not the illumination lamp LS is mounted on the output ends of the power supply circuit DOC at power-on. Although not shown in FIG. 3, the control circuit CC is constructed of a microcomputer that operates by receiving the direct-current control voltage Vcc from the auxiliary power supply circuit connected to the alternating-current power supply AC.

Next, the illumination lamp LS will be described. A pair of power receiving ends TB1 and TB2 of the illumination lamp LS have cap shapes, and are detachably and attachably mounted on the sockets of the output ends TS1 and TS2 of the power supply circuit DOC so that the illumination lamp LS is connected to the power supply circuit DOC. At the same time, the illumination lamp LS is supported by the sockets constituting the output ends TS1 and TS2.

Besides, a diode bridge DB and a bleeder resistor RL are respectively connected in parallel between a series circuit of plural LEDs led and the pair of power receiving ends TB1 and TB2. The bleeder resistor RL is disposed so as to stably and certainly perform the mounting detection of the mounting detection circuit LFD and the de-mounting detection of the load voltage detection circuit VfD. Besides, the form of the whole illumination lamp LS is a thin and long tube shape. The diode bridge DB causes the illumination lamp LS to have no polarity relative to the power supply circuit DOC.

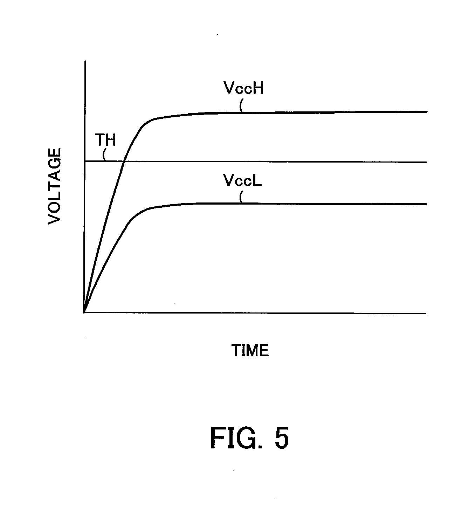

Next, the detection of mounting of the illumination lamp LS by the mounting detection circuit LFD will be described with reference to FIG. 4 and FIG. 5. As is understood from FIG. 4, the mounting detection circuit LFD operates when the power supply circuit DOC does not operate and the mounting detection circuit LFD is driven by the direct-current control voltage Vcc.

The above condition is satisfied in a time zone from time to in FIG. 4 when the alternating-current power supply AC to the lighting device 11 shown in FIG. 1 is turned on and the direct-current control voltage Vcc starts to rise to time t1 when the power supply circuit DOC starts to operate. Incidentally, in FIG. 4, the curve of the direct-current control voltage Vcc represents rising of the direct-current control voltage Vcc, and the curve of the output voltage Vf of the power supply circuit DOC represents rising of the output voltage Vf. As is understood from wave height values of the curve of the direct-current control voltage Vcc and the curve of the output voltage Vf, the output voltage Vf of the power supply circuit DOC is clearly higher than the direct-current control voltage Vcc.

A description will be made on a case of so-called mounting state, in which the power receiving ends TB1 and TB2 of the illumination lamp LS are properly connected to the output ends TS1 and TS2 of the power supply circuit DOC at the time of operation of the mounting detection circuit LFD described above. In this case, a circuit to which the direct-current control voltage Vcc is applied is a series circuit of the resistor R1, and a parallel circuit of the resistor R2 and the illumination lamp LS which is mainly the bleeder resistor RL. The composite resistance of the parallel circuit is lower than the single resistor R2 since the resistance value becomes R2•RL/(R2+RL) because of the foregoing connection. As a result, since the voltage at both ends of the resistor R2 is determined by the ratio of the resistor R1 to the composite resistance, the voltage becomes lower than that obtained when the illumination lamp LS is not connected. Thus, the voltage at both the ends of the resistor R2 becomes low, is averaged by the capacitor C2, and is inputted as an output voltage VccL at the time of mounting of the illumination lamp LS to the control circuit CC.

On the other hand, a description will be made on an unmounting case in which the power receiving ends TB1 and TB2 of the illumination lamp LS are not appropriately connected to the output ends TS1 and TS2 of the power supply circuit DOC. In this case, a circuit to which the direct-current control voltage Vcc is applied is a series circuit of the resistor R1 and the resistor R2. The resistance value of the single resistor R2 is larger than that of the composite resistance. As a result, since the voltage at both the ends of the resistor R2 is determined by the ratio of the resistors R1 and R2, the voltage becomes higher than that obtained when the illumination lamp LS is connected. The voltage at both the ends of the resistor R2 is averaged by the capacitor C2, and is inputted as an output voltage VccH at the time of unmounting of the illumination lamp LS to the control circuit CC.

The control circuit CC compares the inputted output voltage VccL and VccH with a threshold TH shown in FIG. 5. When the output voltage VccL is inputted, the control circuit determines that the illumination lamp LS is mounted on the output ends TS1 and TS2, and controls the drive signal generation circuit DSG of FIG. 2 to switch the switching element Q1. Thus, the DC-DC converter CONV starts a normal operation. As a result, the illumination lamp LS is lit.

On the other hand, when the output voltage VccH is inputted, the control circuit CC determines that the illumination lamp LS is not mounted, and controls the drive signal generation circuit DSG of FIG. 3 not to turn on the switching element Q1. Thus, the DC-DC converter CONV maintains a stop state and performs the protecting operation.

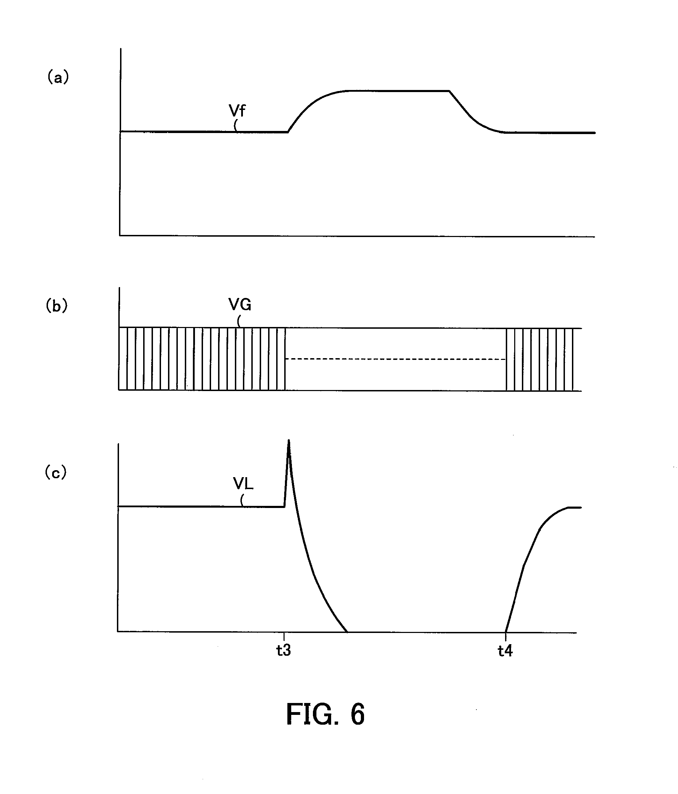

A voltage relation of respective parts at the time of de-mounting and re-mounting during lighting of the illumination lamp LS will be described with reference to FIGS. 6 (a) to 6(c). FIG. 6 (a) shows a waveform of an output voltage Vf of the load voltage detection circuit VfD, FIG. 6(b) shows a waveform of a drive signal voltage VG, and FIG. 6(c) shows a waveform of a both-end voltage VL of the illumination lamp LS.

When the de-mounting of the illumination lamp LS occurs at time t3, since the drive signal of FIG. 6 (b) is continuously generated, the power supply circuit DOC continuously operates, the load of the power supply circuit DOC is lost, and the output voltage Vf of FIG. 6 (a) rises. On the other hand, the both-end voltage VL of FIG. 6(c) becomes high like a pulse at the time point of the occurrence of the de-mounting, and then, the both-end voltage VL is abruptly reduced and becomes 0. When the illumination lamp LS is re-mounted at time t4, the output voltage Vf of FIG. 6(a) and the both-end voltage VL of FIG. 6(c) return to the original.

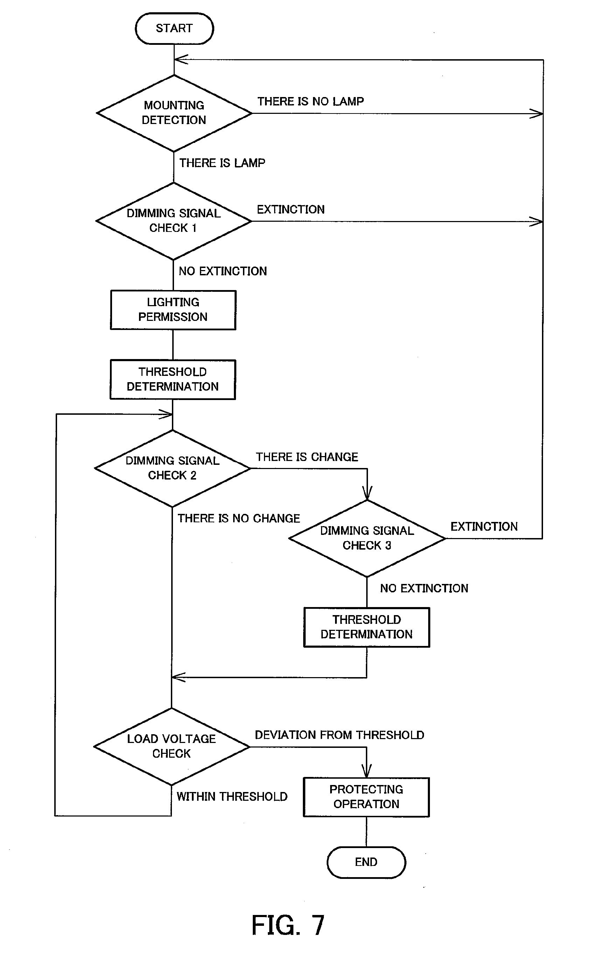

Next, the flow of the protecting operation control will be described with reference to FIG. 7. In the second embodiment, the protecting operation control is performed based on three checks, that is, a mounting check, a dimming signal check and a load voltage check. Before these procedures are described, in order to facilitate the understanding of the meaning of the respective checks, each of them will be described.

The mounting check at power-on is performed by the control circuit CC at the power-on and during lighting. The mounting check performed at the power-on is performed based on the detection result of the mounting detection circuit LFD as described above. However, since this detection is apt to be performed erroneously during the lighting of the illumination lamp LS, the de-mounting detection during the lighting is performed by the load voltage detection circuit VfD instead of by the mounting detection circuit LFD, and is performed based on the detection result at that time by an after-mentioned procedure.

The dimming signal check is to check a dimming signal, which is sent from a dimming signal generation circuit DIM, by the control circuit CC. Whether the illumination lamp LS is turned off and the dimming degree can be known by checking the dimming signal. That is, the dimming signal can include a dimming degree of 0 to 100%. Here, the dimming degree of 0% represents extinction of the lamp. The dimming degree of 100% represents whole light lighting. Accordingly, unless the dimming signal is 0%, since this means that the illumination lamp LS is lit, the presence of lighting can be checked. Besides, if the dimming signal is other than 0%, the degree of dimming, that is, the dimming degree can be known.

Accordingly, the threshold corresponding to the dimming degree can be newly set. In this case, a configuration can be made such that thresholds are previously set for respective dimming degrees, the thresholds are converted into table data and are stored in a memory in the control circuit CC, and a threshold corresponding to a dimming degree is read at the time of threshold setting and is set. Besides, the implemented dimming degree is determined by the after-mentioned load voltage check by request, and the threshold corresponding to the dimming degree may be set.

The load voltage check is performed during the lighting of the illumination lamp LS, and monitoring is made as to whether the load voltage does not deviate from the set threshold. Besides, since the threshold is set by request as described above, the implemented dimming degree can be checked.

Next, under the understanding of the above description, the procedure of the flowchart of the protecting operation control shown in FIG. 7 will be described.

### [Mounting Detection]

When the alternating-current power supply AC is turned on, mounting detection is first performed. The mounting detection is performed based on the detection output of the mounting detection circuit LFD as described before. Incidentally, immediately after the power supply is turned on, since the rise of the auxiliary direct-current power supply is fast, the control circuit CC and the mounting detection circuit LFD start the operation by the direct-current control voltage Vcc supplied from here. On the other hand, in the power supply circuit DOC, the DC-DC converter CONV starts after the drive signal generation circuit DSG starts the operation based on the instruction from the control circuit CC. Thus, as shown in FIG. 4, the voltage appearing between the output ends TS1 and TS2 of the power supply circuit DOC is first the direct-current control voltage Vcc, and after a slight time delay, the output voltage Vf of the power supply circuit DOC appears.

If the result of the mounting detection is "there is lamp" in which the illumination lamp LS is mounted on the output ends TS1 and TS2 of the power supply circuit DOC, a shift is made to next dimming signal check 1. If the result of the mounting detection is "there is no lamp" in which the lamp is not mounted, the mounting detection is again repeated.

### [Dimming Signal Check 1]

In the dimming signal check 1, the presence of extinction of the illumination lamp LS is checked. If the result is "no extinction", lighting is permitted and the threshold is determined. By the permission, the control circuit CC starts the operation of the power supply circuit DOC and determines the threshold. The result of the dimming signal check 1 is "extinction", a return is made to the mounting detection, and this is again repeated.

### [Dimming Signal Check 2]

After the lighting permission is obtained and the illumination lamp LS is lit, a dimming signal check 2 is performed. In the dimming signal check 2, the presence of change of the dimming signal is checked. If the result is "there is no change", a shift is made to a next load voltage check. If the result of the dimming signal check 2 is "there is change", a shift is made to a dimming signal check 3.

### [Dimming Signal Check 3]

In the dimming signal check 3, the presence of extinction of the illumination lamp LS is again checked. If the result is "no extinction", the threshold is determined. If the result of the dimming signal check 3 is "extinction", a return is again made to the mounting detection, and this is repeated.

### [Load voltage Check]

In the load voltage check, the detected load voltage and the threshold are compared with each other, and in order to protect the illumination lamp LS side, a check is made as to whether or not the power supply circuit DOC is required to perform the protecting operation. As a result, if the load voltage is "within threshold" and does not deviate from the threshold, a return is again made to the dimming signal check 2. If the result of the load voltage check is "deviation from threshold", the power supply circuit DOC is made to perform the protecting operation and the protecting operation control is ended.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A lighting device (11) comprising:
a power supply circuit (DOC) to light a light source (LS); and
a control circuit (CC) that determines a threshold based on an output from the power supply circuit (DOC) to the light source (LS), and controls the power supply circuit (DOC) to cause a protecting operation to be performed when an output voltage of the power supply circuit deviates from the threshold.

2. The device (11) of claim 1, wherein the control circuit (CC) includes at least one of an upper limit threshold for arc discharge occurrence and a lower limit threshold for a protecting operation for a short-circuit of the light source (LS).

3. A luminaire (10) comprising:
a light source (LS); and
a lighting device (11) of claim 1 or 2.
